# EUROPÄISCHE PATENTANMELDUNG

(11) **EP 1 752 344 A1**
(43) Veröffentlichungstag der Anmeldung: **14.02.2007**
(21) Anmeldenummer: 06014780.8
(22) Anmeldetag: 15.07.2006
(51) Int. Cl.: B60R 21/34

(54) **Frontklappengelenk mit einer passiven Verformungseinrichtung**

(30) Priorität: 10.08.2005 DE 102005037684
(71) Anmelder: Bayerische Motoren Werke Aktiengesellschaft, 80809 München (DE)
(72) Erfinder: Köstler, Ulrich, 85241 Hebertshausen (DE); Drexl, Thomas, 80801 München (DE); Knechtel, Marcus, 85774 Unterföhring (DE)

(57) **Zusammenfassung**

Eine Frontklappenanordnung (10) eines Fahrzeugs mit einer Scharnieranordnung (12) zum schwenkbaren Abstützen einer Frontklappe (14) an einer Karosserie (16) des Fahrzeugs, ist erfindungsgemäß dadurch gekennzeichnet, dass eine passive Verformungseinrichtung (18) vorgesehen ist, die zum einen an der Karosserie (16) ortsfest angebracht ist und an der zum anderen die Scharnieranordnung (12) ortsfest angebracht ist, und die im Falle eines Fußgängeraufpralls eine Bewegung der Scharnieranordnung (12) samt Frontklappe (14) relativ zur Karosserie (16) ermöglicht.

## Beschreibung

Die Erfindung betrifft eine Frontklappenanordnung eines Fahrzeugs, insbesondere eines Personenkraftfahrzeugs mit einer Scharnieranordnung zum schwenkbaren Abstützen einer Frontklappe an einer Karosserie des Fahrzeugs.

Konventionelle Frontklappen von Personenkraftwagen werden gewöhnlich durch zwei Scharniere an der Karosserie gehalten, welche bezogen auf die Hauptfahrtrichtung des Fahrzeugs im hinteren Abschnitt der Frontklappe unterseitig angeordnet sind. Zusätzlich sind die Frontklappen im vorderen Bereich durch mindestens ein Schloss an die Karosserie gekoppelt.

Die Frontklappen sind derzeit noch so ausgebildet, dass im Falle eines Unfalls mit einem Fußgänger dessen Aufprallenergie im Hinblick auf die strenger werdenden gesetzlichen Vorgaben nicht ausreichend abgefangen werden kann und sich zu hohe biomechanische Kräfte ergeben.

Es ist eine Aufgabe der Erfindung eine Frontklappenanordnung der eingangs genannten Art bereitzustellen, bei der bekannte Befestigungstechniken von konventionellen Frontklappen möglichst wiederverwendet werden können und dennoch für einen verbesserten Fußgängeraufprallschutz gesorgt ist.

Die Aufgabe ist erfindungsgemäß mit einer gattungsgemäßen Frontklappenanordnung gelöst, bei der eine passive Verformungseinrichtung vorgesehen ist, die zum einen an der Karosserie des Fahrzeugs ortsfest angebracht ist und an der zum anderen die Scharnieranordnung ortsfest angebracht ist. Die derart befestigte passive Verformungseinrichtung ist gemäß der Erfindung so gestaltet, dass sie bei einem Fußgängeraufprall eine Bewegung der Scharnieranordnung samt Frontklappe relativ zur Karosserie ermöglicht.
Erfindungsgemäß ist das zur schwenkbaren Lagerung der Frontklappe vorgesehene Scharnier also nicht unmittelbar an der Karosserie ortsfest angebracht, sondern es ist z.B. vorteilhaft an einer Schwenkplatte angebracht, die ihrerseits beim Fußgängeraufprall relativ zu einer an der Karosserie angebrachten Trägerplatte bewegbar ist. Es wird dadurch gemäß der Erfindung innerhalb der passiven Verformungseinrichtung eine Relativbewegung von Schwenkplatte und Trägerplatte ermöglicht, mit der gezielt Aufprallenergie abgebaut werden kann.

Zwischen der Trägerplatte und der Schwenkplatte ist vorteilhaft mindestens ein Hebel vorgesehen, der als mechanische Koppel dient und zu einer einfachen und zugleich wirkungsvollen Führung der genannten Relativbewegung beiträgt. Bevorzugt werden insbesondere zwei Hebel verwendet, mittels denen zwischen Trägerplatte und Schwenkplatte ein Viergelenk gebildet ist.

Geführt ist die Relativbewegung der Frontklappe besonders bevorzugt derart, dass diese eine Schwenkbewegung im Wesentlichen um eine (virtuelle) Drehachse herum ausführt. Eine derartige Drehbewegung der Frontklappe im Falle eines Fußgängeraufpralls kann auf einfache Weise durch verschieden lange Hebel erzielt werden, die an dem genannten Viergelenk ausgebildet sind.

Die genannte Dreh- bzw. Schwenkachse der Frontklappe beim Fußgängeraufprall ist bevorzugt in den Bereich der Frontklappenschlösser gelegt, also in den vorderen Abschnitt der Frontklappe. Die Achse sollte sich ferner im Wesentlichen in Querrichtung des Fahrzeugs erstrecken. Sie kann in besonders einfacher Weise mittels zweier Frontklappenschlösser definiert sein, die sich an der rechten und linken Seite des zugehörigen Fahrzeugs befinden. Mit einer derart angeordneten Drehachse ist eine Rotation der Frontklappe um die Schlösser erreicht, wodurch im Falle eines Fußgängeraufpralls die Frontklappe keine lineare Absenkbewegung durchführt, sondern sich im Wesentlichen allein im hinteren Bereich der Frontklappe senkt. Auf diese Weise muss insgesamt ein kleineres Trägheitsmoment überwunden und es kann ein (schwer vorherbestimmbares) Aufbiegen der Frontklappe vermieden werden. Wenn die Drehachse außerhalb der Frontklappenschlösser angeordnet ist, besteht die Gefahr, dass die Bewegung der Frontklappe behindert wird, sobald diese Bewegung im vorderen Abschnitt des Fahrzeugs über das Spiel innerhalb der Frontklappenschlösser hinausgehen müsste.

Um beim Fußgängeraufprall einen genau definierten Energieabbau zu erzielen, sollte bei der erfindungsgemäßen Frontklappenanordnung ferner die passive Verformungseinrichtung mit einem energieabsorbenden Element versehen sein.

Alternativ oder zusätzlich kann die Frontklappenanordnung auch mit einem dämpfenden Element versehen sein. Mit einem dämpfenden Element kann die Absenkbewegung der erfindungsgemäßen Frontklappe geschwindigkeitsabhängig gesteuert werden.

Die Frontklappenanordnung sollte ferner vorteilhaft eine passive Verformungseinrichtung aufweisen, welche reversibel bzw. rückstellbar ist. Eine solche Rückstellbarkeit kann zum Beispiel auf besonders einfache Weise mit einer sich bei der Absenkbewegung der Frontklappe verformenden Schenkelfeder realisiert sein. Die Schenkelfeder kann in ihrer Einbaulage mit einer definierten Vorspannung angeordnet sein, sodass sie beispielsweise im Wesentlichen das Gewicht der Frontklappe trägt.

Da die erfindungsgemäße Frontklappenanordnung nur für besondere Unfallsituationen vorgesehen ist, welche selten eintreten, kann es grundsätzlich auch ausreichend sein, die passive Verformungseinrichtung irreversibel zu gestalten. Dies kann insbesondere sinnvoll sein, wenn eine die Absenkbewegung sehr präzise steuernde Einrichtung vorgesehen sein soll, die dennoch sehr kostengünstig ist.

Als derartige passive und irreversible Verformungseinrichtung wird erfindungsgemäß ein so genanntes Deformationselement bevorzugt. Ein derartiges Element kann gezielt plastisch verformt werden und weist dabei einerseits eine hohe Stützkraft auf, andererseits bietet es bei einem Abschäl- bzw. Abschervorgang eine genau definierte Kraft-Weg-Abhängigkeit. Das Deformationselement kann vorteilhaft mittels eines stabförmigen, abzuschälenden Elements gestaltet sein, an dem ein Schälblatt angreift. Das Deformationselement ist bevorzugt mit zwei Kappen an den Enden des stabförmigen Elements versehen, deren Abstand sich bei einem Aufprall eines Fußgängers durch die damit verbundene Bewegung der Frontklappe verringert. Durch eine Variation der Form, insbesondere des Durchmessers eines runden abzuschälenden Elements und eine gezielte Wahl des Scherblattes kann der Kraftverlauf während der Abschälbewegung genau moduliert werden. Ferner kann ein derartiges Deformationselement einfach ausgetauscht und dadurch die erfindungsgemäße passive Verformungseinrichtung nach einem Unfall entsprechend einfach wieder instand gesetzt werden. Alternativ oder zusätzlich kann ein solches Deformationselement mittels eines Knickstabes und/oder einer verformbaren Wabenstruktur gestaltet sein. Neben einer plastischen Verformung kann auch ein Strömungsdämpfer, beispielsweise in Form eines hydraulischen Öldämpfers zum Einsatz kommen. Schließlich kann für das gewünschte Abstützen und fallweise Absenken der Frontklappe ein Reibdämpfer verwendet werden, bei dem die kinetische Energie durch Reibkraft abgebaut wird. Da bei einem solchen Reibdämpfer der Haftreibungskoeffizient in der Regel größer als der Gleitreibungskoeffizient ist, kann sowohl das Abstützen als auch das gedämpfte Absenken in sehr einfacher Weise realisiert werden. Gestaltet sein kann ein Reibdämpfer vorteilhaft mittels einer in einem Zylinder verschiebbaren Kolbenstange, an deren Mantelfläche eine Umfangs- oder Längsfeder angeordnet ist, welche gegen den Zylinder vorgespannt ist.

Um ein unbeabsichtigtes Absenken der Frontklappe aufgrund von Belastungen im Stand z.B. durch Anlehnen oder Aufstützen, oder während der Fahrt durch aerodynamische Kräfte zu verhindern, ist die erfindungsgemäße passive Verformungseinrichtung bevorzugt mit einer bewegbaren Arretierung gestaltet. Mit der Arretierung soll die Verformbarkeit der Verformungseinrichtung wahlweise gesperrt oder freigegeben werden können. Die Arretierung ist bevorzugt mit einem beweglichen Arretierstift gebildet, dessen Bewegung mittels eines Elektromagneten gesteuert wird. Die Freigabe des Arretierstifts erfolgt ferner bevorzugt geschwindigkeitsabhängig, insbesondere ab einer Grenzgeschwindigkeit von zwischen ca. 20 km/h bis ca. 50 km/h. Alternativ oder zusätzlich kann die Arretierung auch mittels eines Sensors (insbesondere eines Precrash-Sensors) angesteuert sein.

Die erfindungsgemäße Frontklappenanordnung ermöglicht es im Falle des Aufpralls eines Fußgängers auf eine Frontklappe die damit eingebrachte Aufprallenergie gezielt und genau definiert aufzunehmen und abzubauen. Da die Frontklappenanordnung mit vergleichsweise einfachen Bauteilen realisiert werden kann, ist sie sehr kostengünstig. Sie benötigt ferner wenig Bauraum und kann unter Umständen auch ohne eine spezielle Sensorik genutzt werden.

Nachfolgend werden Ausführungsbeispiele einer erfindungsgemäßen Frontklappenanordnung anhand der beigefügten schematischen Zeichnungen näher erläutert. Es zeigt:
- Fig. 1: eine perspektivische Ansicht eines ersten Ausführungsbeispiels einer erfindungsgemäßen Frontklappenanordnung in deren Grundstellung,
- Fig. 2: die Seitenansicht II-II gemäß Fig. 1,
- Fig. 3: die perspektivische Ansicht gemäß Fig. 1 beim Aufprall eines Fußgängers,
- Fig. 4: die Seitenansicht IV-IV gemäß Fig. 3
- Fig. 5: eine perspektivische Ansicht eines zweiten Ausführungsbeispiels einer erfindungsgemäßen Frontklappenanordnung in deren Grundstellung,
- Fig. 6: die Seitenansicht VI-VI gemäß Fig. 5,
- Fig. 7: die perspektivische Ansicht gemäß Fig. 5 beim Aufprall eines Fußgängers,
- Fig. 8: die Seitenansicht VIII-VIII gemäß Fig. 7,
- Fig. 9: eine stark schematische Seitenansicht eines mit einer erfindungsgemäßen Frontklappenanordnung versehenen Personenkraftwagens und
- Fig. 10: die Ansicht gemäß Fig. 9 mit einer besonders bevorzugten Variante einer erfindungsgemäßen Frontklappenanordnung.

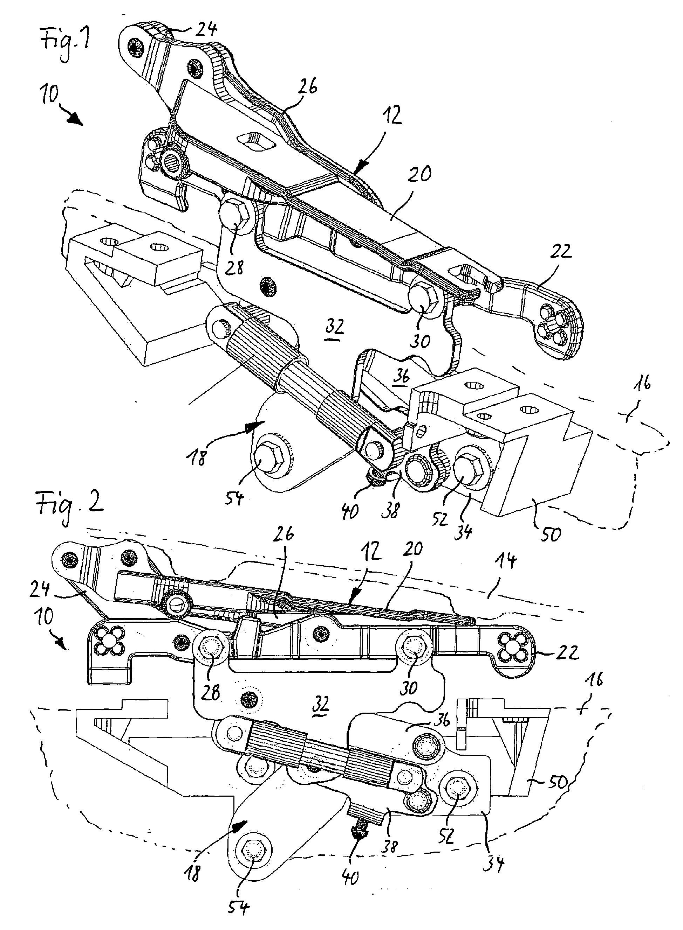

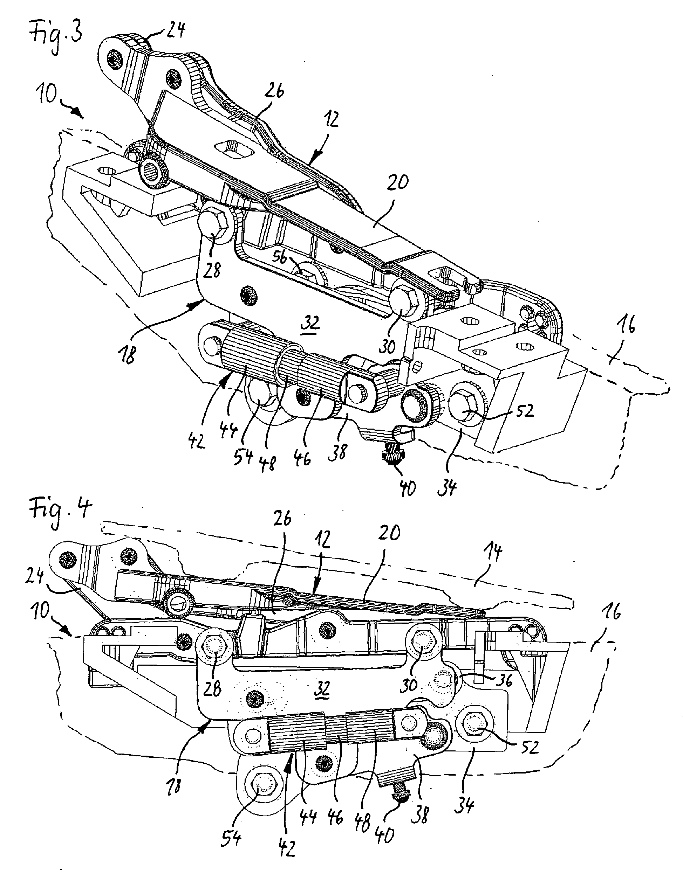

In den Fig. 1 bis 4 ist ein erstes Ausführungsbeispiel einer erfindungsgemäßen Frontklappenanordnung 10 veranschaulicht, welches im bezogen auf die Figuren oberen Abschnitt eine Scharnieranordnung 12 zum schwenkbaren Befestigen einer Frontklappe 14 an einer Karosserie 16 eines weiter nicht veranschaulichten Personenkraftwagens umfasst. Die Scharnieranordnung 12 ist nicht unmittelbar an der Karosserie 16 ortsfest angebracht, sondern an einer Verformungseinrichtung 18 befestigt.

Diese Verformungseinrichtung 18 bildet ein Bindeglied zwischen der Scharnieranordnung 12 und der Karosserie 16 und ermöglicht eine präzise vorbestimmte Bewegung der Scharnieranordnung 12 zusammen mit der Frontklappe 14 relativ zur Karosserie 16, wenn es bei einem Aufprall eines Fußgängers auf die Frontklappe 14 zu einem Energieeintrag in die Frontklappe 14 kommt.

Die Scharnieranordnung 12 ist dabei in herkömmlicher Weise mit einem oberen Träger 20 an der Frontklappe 14 befestigt und weist ferner einen unteren Träger 22 auf, der mittels zweier Scharnierhebel 24 und 26 an dem oberen Träger 20 angelenkt ist. Mit den vier Bauteilen 20 bis 26 ist dabei ein Viergelenk gebildet, welches mittels zweier Schrauben 28 und 30 an einer zur Verformungseinrichtung 18 gehörenden Schwenkplatte 32 ortsfest angeschraubt ist. Die Schwenkplatte 32 ist an einer an der Karosserie 16 befestigten Trägerplatte 34 schwenkbar gelagert und dazu mit dieser Trägerplatte 34 durch zwei Hebel 36 und 38 gekoppelt. Mit den Hebeln 36 und 38 ist wiederum ein Viergelenk ausgebildet, dessen Schwenklage mit einer Einstellschraube 40 vorpositioniert werden kann, die am bezogen auf die Figuren unteren Hebel 38 angeordnet ist und sich gegen die Trägerplatte 34 abstützt.

Das aus den Bauteilen 32 bis 38 gebildete Viergelenk ist ferner mit einem stabförmigen Deformationselement 42 versehen, dessen Länge bei einer Lageänderung des Viergelenks verändert wird und das dadurch eine Schäl- bzw. Scherverformung erfährt und Energie absorbiert.

Das Deformationselement 42 ist an seinen beiden Enden jeweils mit einer Kappe 44 bzw. 46 versehen, zwischen denen sich ein im Querschnitt im Wesentlichen kreisrunder Deformationsstab 48 erstreckt. An einer der Kappen 44 bzw. 46 ist ferner ein nicht dargestelltes Schäl- bzw. Scherblättchen angeordnet, welches auf den Deformationsstab 48 im Falle einer Relativbewegung der beiden Kappen 44 und 46 plastisch einwirkt. Die Relativbewegung der beiden Kappen 44 und 46 findet dann statt, wenn bei einem Aufprall eines Fußgängers auf die Frontklappe 14 hohe Kräfte im Wesentlichen senkrecht nach unten auf die Frontklappenanordnung 10 einwirken. In einem solchen Fall werden die beiden Hebel 36 und 38 relativ zur Trägerplatte 34 bzw. Schwenkplatte 32 geschwenkt, denn eine der beiden Kappen 44 ist an der Trägerplatte 34 angelenkt, während die andere der beiden Kappen 46 am Hebel 38 angelenkt ist.

Die Trägerplatte 34 ist schließlich ebenfalls nicht unmittelbar an der Karosserie 16 befestigt, sondern an einem Multifunktionsträger 50, wozu zwei Schrauben 52 und 54 vorgesehen sind. Der Multifunktionsträger 50 ist seinerseits mittels mehrerer Schrauben, von denen lediglich eine Schraube 56 dargestellt ist, an der Karosserie 16 ortsfest angebracht.

Der Multifunktionsträger 50 ist dabei derart gestaltet, dass er als Gleichteil auch für andere Varianten von Frontklappenanordnungen verbaut werden kann. Insbesondere ist der Multifunktionsträger 50 derart geformt, dass an ihm auch andere, insbesondere aktive Frontklappenstellmechanismen befestigt werden können, mit denen dann im Falle eines Fußgängeraufpralls die Frontklappe auch aktiv angehoben werden kann.

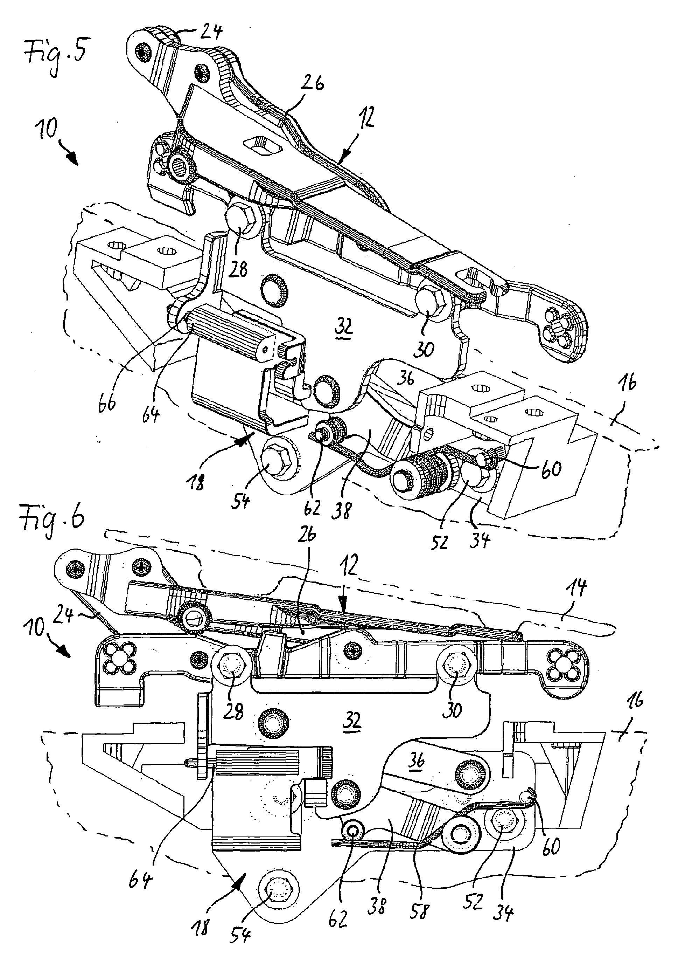

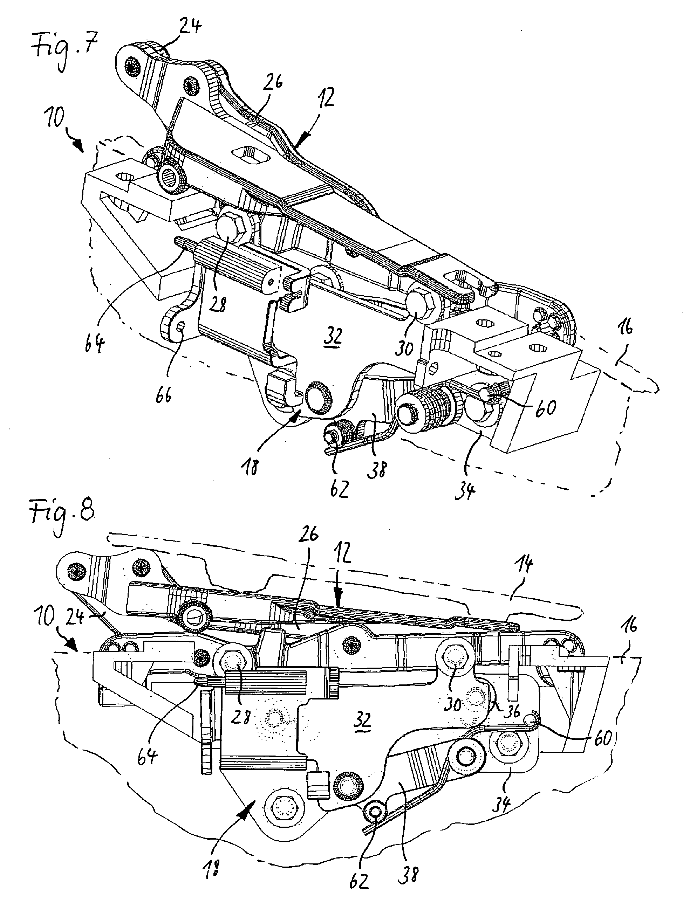

In den Fig. 5 bis 8 ist ein zweites Ausführungsbeispiel einer Frontklappenanordnung 10 dargestellt, welches hinsichtlich der Scharnieranordnung 12 und der grundsätzlichen Mechanik der Verformungseinrichtung 18 ähnlich aufgebaut ist, wie das in den Fig. 1 bis 4 veranschaulichte Ausführungsbeispiel.

Die Verformungseinrichtung 18 des Ausführungsbeispiels gemäß den Fig. 5 bis 8 weist jedoch kein Deformationselement auf, sondern ist mit einer Schenkelfeder 58 versehen, die als elastisches Element eine reversible Verformung an der Verformungseinrichtung 18 ermöglicht. Die Schenkelfeder 58 ist dazu mit einem ihrer beiden Schenkel bzw. Endabschnitte an einem Zapfen 60 an der Trägerplatte 34 abgestützt. Ferner ist die Schenkelfeder 58 mit dem anderen Schenkel an einem Zapfen 62 am bezogen auf die Figuren unteren Hebel 38 abgestützt.

In Falle des Aufpralls eines Fußgängers auf die derart abgestützte Frontklappe 14 kommt es zu einer Abwärtsbewegung insbesondere des Hebels 38 und damit zu einer elastischen Biegung der Schenkelfeder 58.

Bei Stillstand des zugehörigen Fahrzeugs ist eine Auslenkung der Schenkelfeder 58 hingegen durch ein Arretierstift 64 verhindert, der an der Trägerplatte 34 abgestützt ist und in eine an der Schwenkplatte 32 ausgebildete Öffnung 66 wahlweise eingeschoben werden kann. Zum Ein- und Ausschieben wird der Arretierstift 64 durch eine nicht näher veranschaulichte Elektromechanik und ein zugehöriges, ebenfalls nicht dargestelltes Steuergerät bewegt. Auf diese Weise ist verhindert, dass beispielsweise durch ein Abstützen einer Person auf der Frontklappe 14 die Frontklappe 14 unbeabsichtigt abgesenkt werden könnte. Bei einer Geschwindigkeit des zugehörigen Fahrzeugs von insbesondere mehr als ca. 20 km/h wird der Arretierstift 64 hingegen aus der Öffnung 66 herausgezogen und die oben erläuterte Relativbewegung an der Verformungseinrichtung 18 wird freigegeben.

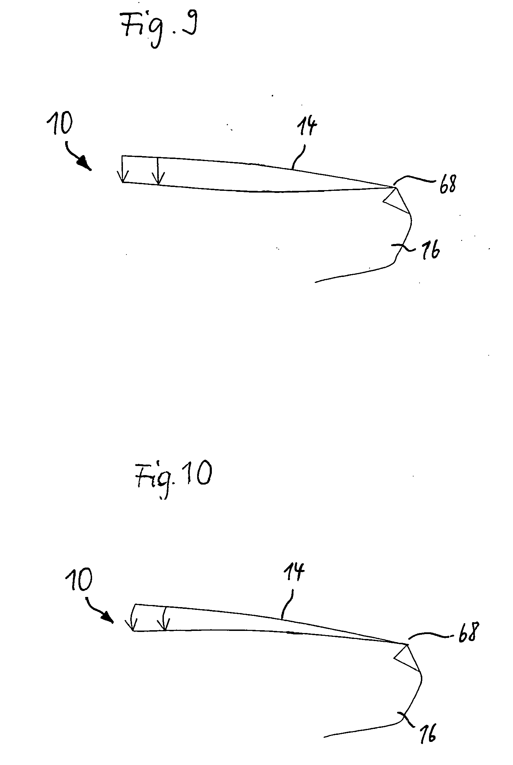

In den Fig. 9 und 10 sind zwei Varianten von Frontklappenanordnungen 10 schematisch veranschaulicht, welche beim Aufprall eines Fußgängers jeweils zu einer unterschiedlichen Bewegung der Frontklappe 14 relativ zur Karosserie 16 führen.

Bei dem in Fig. 9 dargestellten Ausführungsbeispiel ist die Verformungseinrichtung 18 und insbesondere das mit dem Hebeln 36 und 38 gebildete Viergelenk derart gestaltet, dass die Frontklappe 14 bei ihrer Abwärtsbewegung im Wesentlichen parallel verschoben wird. Diese Parallelverschiebung findet jedoch nur im bezogen auf die Hauptfahrtrichtung des zugehörigen Fahrzeugs hinteren Abschnitt der Frontklappe 14 statt, nämlich dort, wo sich die Verformungseinrichtung 18 befindet. Im Bezogen auf die Hauptfahrtrichtung vorderen Abschnitt des Fahrzeugs befindet sich hingegen zwischen der Frontklappe 14 und der Karosserie 16 ein Schloss 68, welches seine Lage und Arretierung durch den Fußgängeraufprall nicht verändert. Wegen der Festlegung der Frontklappe 14 im Bereich des Schlosses 68 kommt es daher zu einer Durchbiegung der Frontklappe 14, wobei grundsätzlich ebenfalls kinetische Energie abgebaut wird. Der derartige Abbau von kinetischer Energie kann jedoch vergleichsweise schlecht vorbestimmt werden.

In Fig. 10 ist demgegenüber eine Variante einer Frontklappenanordnung 10 dargestellt, bei der mit den Hebeln 36 und 38 der Verformungseinrichtung 18 eine Schwenkbewegung der Frontklappe 14 um eine Drehachse geschaffen ist. Die Hebel 36 und 38 sind dazu nicht gleich lang gestaltet, sondern der Hebel 38 ist bezogen auf den Hebel 36 erheblich kürzer gestaltet. Insbesondere weist der Hebel 38 eine Länge von zwischen zirka 40% und zirka 80% der Länge des Hebels 36 auf, besonders bevorzugt eine Länge von zirka 60% der Länge des Hebels 36.

Mit der derart gestalteten Verformungseinrichtung 18 bildet das Schloss 68 eine virtuelle Drehachse, welche sich ferner im Wesentlichen waagrecht und quer zur Hauptfahrtrichtung des Fahrzeugs erstreckt.

Durch die um diese Drehachse schwenkende Frontklappe 14 ist eine Durchbiegung der Frontklappe 14 im Falle des Aufpralls eines Fußgängers vermieden und es kann mit der Verformungseinrichtung 18 sehr gezielt und genau vorherbestimmt die Aufprallenergie abgebaut werden.

### Bezugszeichenliste

- 10: Frontklappenanordnung
- 12: Scharnieranordnung
- 14: Frontklappe
- 16: Karosserie
- 18: Verformungseinrichtung
- 20: oberer Träger
- 22: unterer Träger
- 24: Scharnierhebel
- 26: Scharnierhebel
- 28: Schraube
- 30: Schraube
- 32: Schwenkplatte
- 34: Trägerplatte
- 36: Hebel
- 38: Hebel
- 40: Einstellschraube
- 42: Deformationselement
- 44: Kappe
- 46: Kappe
- 48: Deformationsstab
- 50: Multifunktionsträger
- 52: Schraube
- 54: Schraube
- 56: Schraube
- 58: Schenkelfeder
- 60: Zapfen
- 62: Zapfen
- 64: Arretierstift
- 66: Öffnung
- 68: Schloss

## Patentansprüche

1. Frontklappenanordnung (10) eines Fahrzeugs mit einer Scharnieranordnung (12) zum schwenkbaren Abstützen einer Frontklappe (14) an einer Karosserie (16) des Fahrzeugs,
**dadurch gekennzeichnet, dass** eine passive Verformungseinrichtung (18) vorgesehen ist, die zum einen an der Karosserie (16) ortsfest angebracht ist und an der zum anderen die Scharnieranordnung (12) ortsfest angebracht ist, und die im Falle eines Fußgängeraufpralls eine Bewegung der Scharnieranordnung (12) samt Frontklappe (14) relativ zur Karosserie (16) ermöglicht.

2. Frontklappenanordnung nach Anspruch 1,
**dadurch gekennzeichnet, dass** die passive Verformungseinrichtung (18) mit einer Trägerplatte (34) gebildet ist, die an der Karosserie (16) ortsfest angebracht ist, und mit einer Schwenkplatte (32) gebildet ist, an der die Scharnieranordnung (12) ortsfest angebracht ist, und bei der die Trägerplatte (34) mit der Schwenkplatte (32) über mindestens einen Hebel (36, 38) mechanisch gekoppelt ist.

3. Frontklappenanordnung nach Anspruch 1 oder 2,
**dadurch gekennzeichnet, dass** die passive Verformungseinrichtung (18) eine Führungsmechanik (32, 34, 36, 38) aufweist, mit der die Bewegung der Frontklappe (14) auf eine Schwenkbewegung im Wesentlichen um eine Drehachse (68) herum begrenzt ist.

4. Frontklappenanordnung nach Anspruch 3,
**dadurch gekennzeichnet, dass** die Drehachse in den Bereich mindestens eines Schlosses (68) der Frontklappe (14) gelegt ist und sich im Wesentlichen in Querrichtung des Fahrzeugs erstreckt.

5. Frontklappenanordnung nach einem der Ansprüche 1 bis 4,
**dadurch gekennzeichnet, dass** die passive Verformungseinrichtung (18) mit einem Energie absorbierenden Element (42, 58) versehen ist.

6. Frontklappenanordnung nach einem der Ansprüche 1 bis 5,
**dadurch gekennzeichnet, dass** die passive Verformungseinrichtung (18) mit einem dämpfenden Element versehen ist.

7. Frontklappenanordnung nach einem der Ansprüche 1 bis 6,
**dadurch gekennzeichnet, dass** die passive Verformungseinrichtung (18) reversibel gestaltet ist.

8. Frontklappenanordnung nach Anspruch 7,
**dadurch gekennzeichnet, dass** die passive Verformungseinrichtung (18) mit einer bei der Bewegung sich verformenden Schenkelfeder (58) gestaltet ist.

9. Frontklappenanordnung nach einem der Ansprüche 1 bis 6,
**dadurch gekennzeichnet, dass** die passive Verformungseinrichtung (18) irreversibel gestaltet ist.

10. Frontklappenanordnung nach Anspruch 9,
**dadurch gekennzeichnet, dass** die passive Verformungseinrichtung (18) mit einem Deformationselement (42) gestaltet ist.

11. Frontklappenanordnung nach einem der Ansprüche 1 bis 10,
**dadurch gekennzeichnet, dass** die passive Verformungseinrichtung (18) mit einer bewegbaren Arretierung (64, 66) gestaltet ist, mittels der die Verformbarkeit der passiven Verformungseinrichtung (18) wahlweise gesperrt oder freigegeben werden kann.
